Europäisches Patentamt

European Patent Office

Office européen des brevets

(11) Veröffentlichungsnummer: **0 243 526**
**B1**

(12) **EUROPÄISCHE PATENTSCHRIFT**

(45) Veröffentlichungstag der Patentschrift:
26.09.90

(21) Anmeldenummer: **86106027.5**

(22) Anmeldetag: **02.05.86**

(51) Int. Cl.⁵: **F16B 33/00,** F16B 15/06
// E06B3/30

(54) Einschlagschraube.

(43) Veröffentlichungstag der Anmeldung:
**04.11.87 Patentblatt 87/45**

(45) Bekanntmachung des Hinweises auf die Patenterteilung:
**26.09.90 Patentblatt 90/39**

(84) Benannte Vertragsstaaten:
**DE FR GB**

(56) Entgegenhaltungen:
**DE-A- 1 400 911
DE-A- 2 452 614
DE-A- 2 552 091
DE-A- 2 644 215
DE-A- 3 441 784
GB-A- 1 480 202
US-A- 1 946 800
US-A- 3 399 589**

(73) Patentinhaber: **V. KANN RASMUSSEN INDUSTRI A/S,
10 Tobaksvejen, DK-2860 Soborg(DK)**

(72) Erfinder: **Sonneborn, Siegfried, Dipl.-Ing.,
Dorfstrasse 50, D-2081 Tangstedt(DE)**
Erfinder: **Handel, Manfred, Weilerweg 30,
D-7315 Weilheim/Teck(DE)**
Erfinder: **Mack, Ernst, Neidlinger Strasse 22,
D-7315 Weilheim/Teck(DE)**

(74) Vertreter: **Meyer, Ludgerus, Patentanwälte Meyer,
Stach, Vonnemann Jungfernstieg 38,
D-2000 Hamburg 36(DE)**

**Beschreibung**

Die Erfindung betrifft eine Einschlagschraube zur lösbaren Festlegung von mit Durchgangsbohrungen versehenen Bauteilen, insbesondere Fensterrahmen-Abdeckblechen, mit einem Kopf, einem darin angeordneten Schlitz sowie einem mindest einen Gewindesteg tragenden Schaft, der in eine vorgefertigte Aufnahmebohrung festsitzend eintreibbar ist, wobei der Kopf einen um den Schaft herum schräg auswärts gerichteten Kragen mit einer ringförmig axialen Endkante und zwischen der ringförmigen Endkante des Kragens und dem Schaft eine Ringnut mit im Querschnitt gekehlter Bodenfläche aufweist.

Aus der US-A 3 399 589 ist eine Schraube mit hinterschnittenem Kopf bekannt, die bei bestimmungsgemäßem Gebrauch auch dichtet. Die Dichtfunktion wird durch ein zusätzliches ringförmiges Element erreicht. Die Schraube ist jedoch nicht zum Einschlagen geeignet.

Desweiteren ist aus der DE-C 2 644 215 eine Einschlagschraube für Formstoffe und weiche Metalle bekannt, bei welcher das Gewinde bis an die plane Unterseite des scheibenartig ausgebildeten Kopfes heranreicht, die Vorderflanke der Gewindestege vier bis sechsmal größer ist, als die Rückflanke, und der Winkel zwischen der Mittelachse und der Vorderflanke zwischen 9° und 13° liegt. Derartige Einschlagschrauben ergeben zwar beim Eintreiben in Formstoffe und weiche Metalle einen haltbaren Sitz, sind jedoch für Anwendungen im Freien oder an feuchtigkeitsbeaufschlagten Stellen nicht geeignet, da zwischen dem Schraubenkopf und dem durch diesen gehaltenen, von der Schraube durchsetzten Bauteil leicht Feuchtigkeit in das Gewinde und damit in dessen Aufnahmebohrung eindringt, was dort Korrosionen oder Verrottung begünstigt und längerfristig den Sitz der Einschlagschraube beeinträchtigt.

Die DE-A 1 400 911 beschreibt eine mit einem Hammer eintreibbare Holzschraube, deren schwach konischer Schaft einen über den Gewindeabschnitt hinaus vortretenden Abschnitt mit scharfer Spitze zur Führung der Schraube beim Eindringen aufweist. Diese Schraube muß jedoch nach anfänglichem Eintreiben mit dem Hammer noch in herkömmlicher Weise durch Drehen mit einem Schraubenzieher festgezogen werden und ermöglicht daher weder eine rasche, gegebenenfalls maschinell vorzunehmende Festlegung, noch eine feuchtigkeitsdichte Montage.

Die DE-A 2 452 614 offenbart schließlich ein in koaxiale Löcher zu verbindender Bauteile einzutreibendes Verbindungselement aus Kunststoff mit hinterschnittenem Kopf und einem Schaft mit einer an dessen freien Ende angeordneten Verdickung, die sich beim Einbau mit einem Innengewinde des Loches des vom Kopf abgewandten Bauteils verklammert. Die hinterschnittene Schulterfläche des mit einem Schlitz zur Aufnahme eines Schraubendrehers versehenen Kopfes verläuft unter einem spitzen Winkel zur Schaftmantellinie, so daß sich der Rand des Kopfes beim Einbau unter elastischer Verformung an das zugewandte Bauteil anlegt. Derartige Verbindungselemente ergeben jedoch in normalen Sackbohrungen keinen dauerhaft festen Sitz und eignen sich insbesondere nicht zur dichten Festlegung von permanent witterungsbeaufschlagten Bauteilen, wie Dachfenster-Abdeckungen, bei denen durch Son neneinstrahlung, Regen, Frost etc. infolge unterschiedlicher Dehnungen und Zugspannungen leicht Undichtigkeiten und Spannungsrisse an den Verbindungselementen auftreten.

Aufgabe der Erfindung ist es nun, eine Einschlagschraube der eingangs genannten Art zu schaffen, die bei einfacher Konstruktion und rascher, dauerhaft festsitzender Anbringbarkeit ein Eindringen von Feuchtigkeit in die Aufnahmebohrung weitgehend verhindert.

Zur Lösung dieser Aufgabe ist die Einschlagschraube der eingangs genannten Art erfindungsgemäß mit den Merkmalen des Patentanspruchs 1 ausgestattet.

Diese Einschlagschraube kann unaufwendig gefertigt und rasch und einfach mit einem Schlagwerkzeug oder aber maschinell eingetrieben werden und ergibt dabei durch das Zusammenwirken des schräg auswärts gerichteten Kragens mit der Außenfläche des festzulegenden Bauteils und den Preßsitz des konischen Schaftabschnitts in der Aufnahmebohrung einen verbesserten Schutz gegen das Eindringen von Wasser oder Feuchtigkeit. Bei der lösbaren Festlegung von jeweils an den Durchgangsbohrungen mit Dimpelungen versehenen Abdeckblechen an der Außenseite der meist aus Holz bestehenden Rahmen von Dachfenstern wird durch den die Dimpelung überdeckend gegen das Abdeckblech anliegenden Kragen, die in die Ringnut aufgenommene Dimpelung und den Preßsitz des konischen Schaftabschnitts jedes Eindringen von Wasser in die Aufnahmebohrung des Fensterrahmens zuverlässig verhindert.

Vorteilhafte weitere Ausgestaltungen der Einschlagschraube sind in den Unteransprüchen beschrieben.

Im folgenden wird eine bevorzugte Ausführungsform der Einschlagschraube unter Bezugnahme auf die beigefügten Zeich nungen weiter erläutert. Es zeigen:

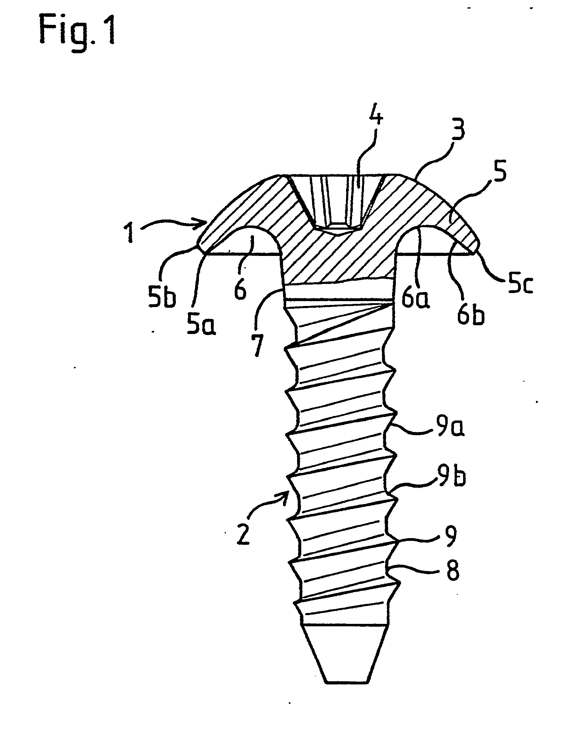

Fig. 1 einen schematischen Längsschnitt der Einschlagschraube und

Fig. 2 einen Längsschnitt der eingebauten Einschlagschraube.

Die dargestellte Einschlagschraube 1 besitzt einen Kopf 3 mit gewölbter Außenfläche und einem darin eingetieften Kreuzschlitz 4 sowie einen Schaft 2 mit einem sich unter einem Winkel von etwa 5° konisch verjüngenden, kopfnahen Schaftabschnitt 7 und einem an diesen anschließenden, mit Gewindestegen 9 versehenen Schaftabschnitt 8. Der Kopf 3 besitzt einen um den konischen Schaftabschnitt 7 herum unter einem Winkel θ von 50° schräg auswärts gerichteten Kragen 5 mit einer axialen ringförmigen Endkante 5a und einem konzentrisch auswärts versetzten Außenrand 5b. Zwischen dem Kragen 5 und dem konischen Schaftabschnitt 7 ist eine Ringnut 6 mit im Querschnitt gekehlter Bodenfläche 6a ausgebildet.

Bei der dargestellten Ausführungsform besitzt die aus einer AlMg2-Legierung bestehende Einschlagschraube nur einen Gewindesteg 9, dessen Vorderflanke 9a unter einem Winkel von 30° zur Schaftlängsachse verläuft, während die Rückflanke 9b unter einem Winkel von 45° gegen die Schaftlängsachse entgegengesetzt geneigt ist und an ihrem Außenrand mit der Vorderflanke 9a unter einem Winkel von 105° zusammentrifft. Der Schaft 2 endet in einem kegelstumpfförmigen Endabschnitt mit stumpfer Endfläche. Die Außenkanten benachbarter Windungen des Gewindesteges 9 sind voneinander axial um etwa 2 mm beabstandet. Zwischen den Windungen des Gewindesteges 9 ist jeweils eine im wesentlichen zylindrische Schaftwandfläche vorgesehen. Die axiale Endkante 5a des Kragens 5 hat einen Durchmesser von 13 mm und der konische Schaftabschnitt 7 einen maximalen Durchmesser von 5,6 mm und einen am gewindenahen Ende gemessenen Durchmesser von 5,3 mm. Die Ringnut 6 ist relativ zu der durch die Endkante 5a definierte Querebene 1,8 mm tief. Der in eine Aufnahmebohrung 12 mit einem lichten Durchmesser von etwa 4,5 mm einzutreibende gewinde tragende Schaftabschnitt 8 hat einen Kerndurchmesser von 4,2 mm, während der Durchmesser der Außenkanten der Gewindestege 9 5,3 mm beträgt.

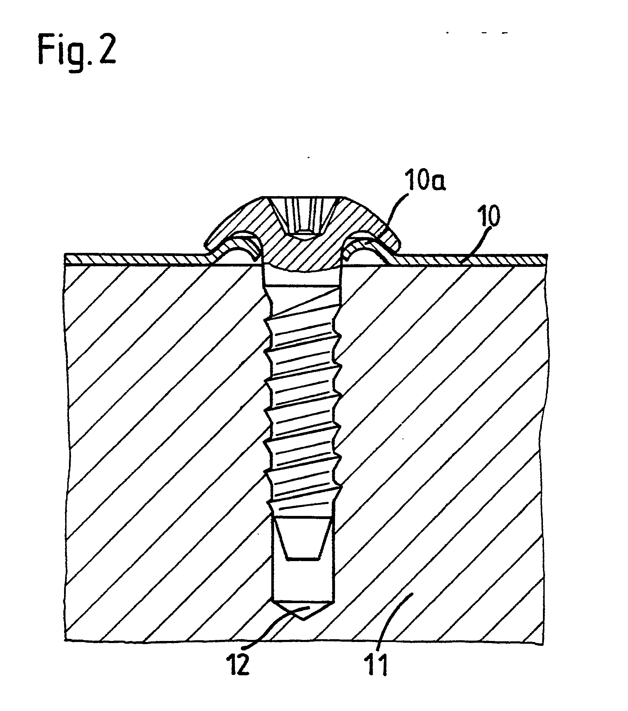

Diese Einschlagschraube eignet sich besonders zur lösbaren Festlegung von Abdeckblechen 10 an der Außenseite der Blend- und Flügelrahmen von Dachfenstern (Fig. 2). Hierzu werden in deren Blendrahmen bzw. Flügelrahmen 11 maschinell vorgefertigte Aufnahmebohrungen 12 für die Einschlagschrauben 1 vorgesehen, während die Abdeckbleche 10 an den entsprechenden Stellen vorgefertigte Durchgangsbohrungen aufweisen, die vorzugsweise von auswärts vorstehenden Dimpelungen oder Aufbördelungen 10a umschlossen sind. Beim Einbau werden die Einschlagschrauben 1 jeweils durch die fluchtend auf die zugeordnete Aufnahmebohrung 12 des Fensterrahmens 11 aufgelegte Durchgangsbohrung des Abdeckblechs 10 hindurch mit einem Hammer so eingetrieben, daß sich einerseits der Kragen 5 dichtend gegen die Außenfläche des Abdeckblechs 10 anlegt und andererseits der konische Schaftabschnitt 7 im Preßsitz gegen die Umfangswand der Aufnahmebohrung angedrückt wird. Wenn die Durchgangsbohrung noch von einer 0,6 bis 1,5 mm auswärts vorstehenden Ringaufbördelung oder wellenförmigen Dimpelung 10a umschlossen ist, wird diese in der Einbaustellung vom Kragen 5 der Einschlagschraube 1 überdeckt, wobei durch die Anlage der Dimpelung 10a an der gekehlten Bodenfläche 6a der Ringnut 6 eine noch bessere Abdichtung erzielt wird.

Die vorstehend an Hand einer bevorzugten Ausführungsform erläuterte Einschlagschraube kann vom Fachmann je nach den Anforderungen aus geeignetem Metall oder witterungsbeständigem, rißfestem Kunststoff gefertigt und in verschiedener Weise zweckentsprechend abgewandelt werden, wobei die Abmessungen und die Querschnittsform des Kragens 5 und der Ringnut 6 unter Berücksichtigung der Materialbeschaffenheit der Einschlagschraube 1 und der Abmessungen der Aufnahmebohrungen 12, der Durchgangsbohrungen der festzulegenden Abdeckbleche 10 oder dergl. sowie der etwaigen Dimpelungen 10a so abgestimmt werden sollen, daß sich beim Einbau eine möglichst wasserdichte Anlage des Kragens 5 bzw. des konischen Schaftabschnitts am festzulegenden Bauteil bzw. der Aufnahmebohrung 12 ergibt.

Zur Festlegung von Abdeckblechen an Fenstern eignen sich insbesondere Einschlagschrauben aus einer Aluminiumlegierung mit einem Mg-Gehalt von 1 bis 2,5%. Deren auch beim manuellen Einschlagen in die Aufnahmebohrungen der Holzrahmen nur wenig verformte Gewindestege ergeben mit dem elastischen Holz einen dauerhaft festen Sitz, so daß die axiale Ringkante 5a des Kragens 5 fest gegen das Abdeckblech 10 angedrückt bleibt und das auf dem geneigten Abdeckblech 10 herunterlaufende Regenwasser durch das Zusammenwirken des Kragens 5 mit dem Abdeckblech 10, der Dimpelung 10a mit der Ringnut 6 und des konischen Schaftabschnitts 7 mit der Wandung der Aufnahmebohrung 12 nicht in diese eindringen kann.

## Patentansprüche

1. Einschlagschraube zur lösbaren Festlegung von mit Durchgangsbohrungen versehenen Bauteilen, insbesondere Fensterrahmen-Abdeckblechen, mit einem Kopf, einem darin angeordneten Schlitz sowie einem mindest einen Gewindesteg tragenden Schaft, der in eine vorgefertigte Aufnahmebohrung festsitzend eintreibbar ist, wobei der Kopf (3) einen um den Schaft (2) herum schräg auswärts gerichteten Kragen (5) mit einer ringförmig axialen Endkante (5a) und zwischen der ringförmigen Endkante (5a) des Kragens (5) und dem Schaft eine Ringnut (6) mit im Querschnitt gekehlter Bodenfläche (6a) aufweist, dadurch gekennzeichnet, daß jeder Gewindesteg (9) Abstand von der durch die ringförmige Endkante (5a) des Kragen (5) definierten Querebene unter Bildung eines gewindefreien Schaftabschnittes (7) endet und der gewindefreie kopfnahe Schaftabschnitt (7) sich vom Kopf (5) fort unter einem Winkel von 1 bis 10° im wesentlichen konisch verjüngt.

2. Einschlagschraube nach Anspruch 1, dadurch gekennzeichnet, daß der an die axiale Endkante (5a) des Kragens (5) angrenzende Wandflächenbereich (6b) der Ringnut (6) im Querschnitt unter einem Winkel $\theta$ von 40° bis 60° zur Schaftlängsachse aufwärts verläuft.

3. Einschlagschraube nach Anspruch 1 oder 2, dadurch gekennzeichnet, daß die axiale Endkante (5a) des Kragens (5) gegenüber dessen konzentrischen radialen Außenrand (5b) um 0,2 bis 0,6 mm und vorzugsweise zwischen 0,3 und 0,5 mm radial einwärts versetzt angeordnet ist und zwischen der axialen Endkante (5a) und dem radialen Außenrand (5b) des Kragens (5) eine ringsum auswärts schräg oder gewölbt zurücktretende Übergangsfläche (5c) vorgesehen ist.

4. Einschlagschraube nach einem der Ansprüche 1 bis 3, dadurch gekennzeichnet, daß die Ringnut (6) im Querschnitt ihre größte axiale Tiefe in einem, bezogen auf die Querebene der Endkante (5a), 30 bis 50% ihrer radialen Nutbreite entsprechenden Abstand vom Schaftabschnitt (7) aufweist.

5. Einschlagschraube nach einem der Ansprüche 1 bis 4, dadurch gekennzeichnet, daß die axiale Endkante (5a) des Kragens einen Durchmesser von 12 bis 14 mm und vorzugsweise etwa 13 mm aufweist, der sich konisch verjüngende Schaftabschnitt (7) in der Querebene der Endkante (5a) einen Durchmesser zwischen 4 und 7 mm und vorzugsweise zwischen 5 und 6 mm besitzt und die größte axiale Tiefe der Ringnut (6) 1,0 und 2,5 mm und vorzugsweise 1,5 bis 2,5 mm beträgt.

6. Einschlagschraube nach einem der Ansprüche 1 bis 5, dadurch gekennzeichnet, daß jeder Gewindesteg (9) eine unter einem Winkel α zwischen 25° und 45° gegen die Schaftlängsachse geneigte Vorderflanke (9a) und ein unter einem Winkel β zwischen 45° und 75° entgegengesetzt geneigte Rückflanke (9b) aufweist, die relativ zur Vorderflanke (9a) unter einem Winkel zwischen 70° und 110° verläuft.

7. Einschlagschraube nach Anspruch 6, dadurch gekennzeichnet, daß der Gewindesteg (9) eine zwischen der Vorderflanke (9a) und der Rückflanke (9b) liegende zylindrische Übergangsfläche (9c) mit einer axialen Breite zwischen 0,1 und 0,3 mm aufweist.

8. Einschlagschraube nach einem der Ansprüche 1 bis 7, dadurch gekennzeichnet, daß die Gewindestege (9) im Außendurchmesser dem angrenzenden Ende des kopfnahen Schaftabschnittes (7) entsprechen, und eine radiale Höhe von 0,3 bis 0,8 mm und vorzugsweise 0,4 bis 0,7 mm besitzen und der axiale Abstand zwischen den Außenrändern der Rückflanken (9b) benachbarter Gewindestege (9) 1,0 bis 2,5 mm und vorzugsweise 1,5 bis 2,0 mm beträgt.

9. Einschlagschraube nach einem der Ansprüche 1 bis 8, dadurch gekennzeichnet, daß der Kopf und der Schaft einstückig aus Leichtmetall, vorzugsweise Aluminium oder einer Aluminium-Legierung bestehen.

10. Einschlagschraube nach einem der Ansprüche 1 bis 8, dadurch gekennzeichnet, daß diese aus gegen Oxidation und UV-Strahlung stabilisiertem Polyoxymethylen oder Polyamid mit hinreichender Kerbschlagzähigkeit und Spannungsrißfestigkeit besteht.

## Revendications

1. Vis à frapper pour fixer de manière amovible des pièces munies de perçages traversants, notamment des tôles de revêtement de dormant de fenêtre, vis comportant une tête munie d'une fente ainsi qu'une tige portant au moins un filetage et qui s'enfonce de manière solidaire dans un perçage réalisé préalablement, la tête (3) ayant un collet (5) entourant la tige (2) et dirigé de manière inclinée vers l'extérieur, avec une arête d'extrémité (5a), axiale, annulaire, et, entre l'arête d'extrémité (5a) annulaire du collet (5) et la tige, il y a une rainure annulaire (6) dont la section va en se rétrécissant vers un fond (6a), caractérisée en ce que chaque filet (9) se termine à une distance axiale prédéterminée de l'arête d'extrémité annulaire (5a) du collet (5) par un plan transversal défini en formant un segment de tige (7) sans filetage et le segment de tige (7) sans filetage, situé du côté de la tête va en se rétrécissant de manière essentiellement conique en partant de la tête (5) et suivant un angle de 1 à 10°.

2. Vis à frapper selon la revendication 1, caractérisée en ce que la zone de surface de paroi (6b) de la rainure annulaire (6), zone adjacente à l'arête d'extrémité (5a) axiale du collet (5), présente en section un angle ($\theta$) compris entre 40° et 60° par rapport à l'axe longitudinal de la tige.

3. Vis à frapper selon la revendication 1 ou 2, caractérisée en ce que l'arête d'extrémité axiale (5a) du collet (5) est décalée vers l'intérieur par rapport au bord extérieur (5b) radialement et de manière concentrique de 0,2 à 0,6 mm et de préférence de 0,3 et 0,5 mm, et en ce qu'entre l'arête d'extrémité axiale (5a) et le bord extérieur radial (5b) du collet (5), on a une surface de transition (5c) en retrait annulaire vers l'extérieur, inclinée ou bombée.

4. Vis à frapper selon l'une des revendications 1 à 3, caractérisée en ce que la rainure annulaire (6) présente en section, sa plus grande profondeur axiale à une distance du segment de corps (7), rapportée au plan transversal de l'arête d'extrémité (5a) qui correspond à 30–50% de la largeur radiale de sa rainure.

5. Vis à frapper selon l'une des revendications 1 à 4, caractérisée en ce que l'arête d'extrémité (5a) axiale du collet présente un diamètre de 12 à 14 mm et de préférence de l'ordre de 13 mm, le diamètre du segment de corps (7) allant en se rétrécissant de manière conique, présente dans le plan transversal de l'arête d'extrémité (5a), un diamètre entre 4 et 7 mm et de préférence entre 5 et 6 mm et la plus grande profondeur axiale de la rainure annulaire (6) est de 1,0 à 2,5 mm et de préférence de 1,5 à 2,5 mm.

6. Vis à frapper selon l'une des revendications 1 à 5, caractérisée en ce que chaque filet (9) présente un flanc avant (9a) faisant un angle a compris entre 25° et 45° par rapport à l'axe longitudinal de la tige de la vis et un flanc arrière (9b) incliné en sens opposé d'un angle β compris entre 45° et 75°, ce flanc arrière faisant par rapport au flanc avant (9a) un angle compris entre 70° et 110°.

7. Vis à frapper selon la revendication 6, caractérisée en ce que le filet (9) présente une surface de transition (9c) cylindrique entre le flanc avant (9a) et le flanc arrière (9b), cette surface ayant une largeur axiale comprise entre 0,1 et 0,3 mm.

8. Vis à frapper selon l'une des revendications 1 à 7, caractérisée en ce que les filets (9) ont un diamètre extérieur correspondant à l'extrémité adjacente du segment de la tige (7) situé du côté de la tête et une hauteur radiale de 0,3 à 0,8 mm et de préférence 0,4 à 0,7 mm et la distance axiale entre les bords extérieurs des flancs arrière (9b) de filets voisins (9) est de 1,0 à 2,5 mm et de préférence de 1,5 à 2,0 mm.

9. Vis à frapper selon l'une des revendications 1 à 8, caractérisée en ce que la tête et la tige sont réalisés en une seule pièce en métal léger de préférence en aluminium ou en un alliage d'aluminium.

10. Vis à frapper selon l'une des revendications 1 à 8, caractérisée en ce qu'elle est réalisée en un polyoxyméthylène ou polyamide stabilisé contre l'oxydation et le rayonnement ultraviolet, et ayant une dureté aux entailles et une résistance à l'arrachage suffisantes.

## Claims

1. Drive-in screw fro detachably fastening components provided with through holes, in particular window frame cover plates, having a head with a slot disposed therein and a shank which carries at least one thread web and can be driven tightly into a prefabricated location hole, the head (3) having a collar (5), which has an annular axial end edge (5a) and is directed obliquely outwards around the shank (2), and an annular groove (6) which is disposed between the annular end edge (5a) of the collar (5) and the shank and has a bottom area (6a) which is fluted in cross-section, characterised in that each thread web (9) terminates at a predetermined axial distance from the transverse plane defined by the annular end edge (5a) of the collar (5) so as to form a thread-free shank portion (7) and the thread-free shank portion (7) adjacent to the head basically tapers away from the head (5) at an angle of 1 to 10°.

2. Drive-in screw according to claim 1, characterised in that the wall surface region (6b) of the annular groove (6) adjacent to the axial end edge (5a) of the collar (5) in cross-section extends upwards at an angle of 40° to 60° relative to the shank longitudinal axis.

3. Drive-in screw according to claim 1 or 2, characterised in that the axial end edge (5a) of the collar (5) is offset radially inwars by 0.2 to 0.6 mm and preferably between 0.3 and 0.5 mm relative to its concentric radial outer edge (5b) and a transitional surface (5c) which recedes all around in an outwardly sloping or curved manner is provided between the axial end edge (5a) and the radial outer edge (5b) of the collar (5).

4. Drive-in screw according to one of claims 1 to 3, characterised in that the annular groove (6) in cross-section has its greatest axial depth at a distance from the shank portion (7) corresponding to 30 to 50% of its radial groove width relative to the transverse plane of the end edge (5a).

5. Drive-in screw according to one of claims 1 to 4, characterised in that the axial end edge (5a) of the collar (5) has a diameter of 12 to 14 mm and preferably approximately 13 mm, the tapering shank portion (7) in the transverse plane of the end edge (5a) has a diameter of between 4 and 7 mm and preferably between 5 and 6 mm, and the greatest axial depth of the annular groove (6) is 1.0 to 2.5 mm and preferably 1.5 to 2.5 mm.

6. Drive-in screw according to one of claims 1 to 5, characterised in that each thread web (9) has a front flank (9a) inclined at an angle α of between 25° and 45° towards the shank longitudinal axis and a back flank (9b) which is inversely inclined at an angle β of betwen 45° and 75° and extends at an angle of betwen 70° and 110° relative to the front flank (9a).

7. Drive-in screw according to claim 6, characterised in that the thread web (9) has a cylindrical transitional surface (9c) having an axial width of between 0.1 and 0.3 mm located between the front flank (9a) and the back flank (9b).

8. Drive-in screw according to one of claims 1 to 7, characterised in that the thread webs (9) correspond in outer diameter to the adjacent end of the shank portion (7) close to the head and have a radial height of 0.3 to 0.8 mm and preferably 0.4 to 0.7 mm and the axial distance between the outer edges of the back flanks (9b) of adjacent thread webs (9) is 1.0 to 2.5 mm and preferably 1.5 to 2.0 mm.

9. Drive-in screw according to one of claims 1 to 8, characterised in that the head and the shank are made in one piece of a light metal, preferably aluminium or an aluminium alloy.

10. Drive-in screw according to one of claims 1 to 8, characterised in that   is made of polyoxymethylene or polyamide having an adequate impact value and resistance to stress cracking which has been stabilised against oxidation and UV radiation.

# Fig.1

# Fig. 2